Europäisches Patentamt

European Patent Office

Office européen des brevets

(19)

(11) **EP 1 222 621 B1**

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(51) Int Cl.⁷: $G06K\ 19/073$

(21) Anmeldenummer: **00962227.5**

(22) Anmeldetag: **17.08.2000**

(86) Internationale Anmeldenummer:
**PCT/DE00/02792**

(87) Internationale Veröffentlichungsnummer:
**WO 01/013330 (22.02.2001 Gazette 2001/08)**

(54) **INTEGRIERTER SCHALTKREIS UND SCHALTUNGSANORDNUNG ZUR STROMVERSORGUNG EINES INTEGRIERTEN SCHALTKREISES**

INTEGRATED CIRCUIT AND CIRCUIT ARRANGEMENT FOR SUPPLYING AN INTEGRATED CIRCUIT WITH ELECTRICITY

CIRCUIT DE COMMUTATION INTEGRE ET CIRCUITERIE D'ALIMENTATION EN COURANT D'UN CIRCUIT DE COMMUTATION INTEGRE

(84) Benannte Vertragsstaaten:
**AT DE ES FR GB IT**

(30) Priorität: **17.08.1999 DE 19938890**

(43) Veröffentlichungstag der Anmeldung:
**17.07.2002 Patentblatt 2002/29**

(73) Patentinhaber: **Infineon Technologies AG
81669 München (DE)**

(72) Erfinder: **WEDEL, Armin
D-86415 Mering (DE)**

(74) Vertreter: **Epping Hermann & Fischer
Ridlerstrasse 55
80339 München (DE)**

(56) Entgegenhaltungen:
**EP-A- 0 509 567     GB-A- 2 288 048
US-A- 5 877 547**

**Beschreibung**

Integrierter Schaltkreis und Schaltungsanordnung zur Stromversorgung eines integrierten Schaltkreises

Die vorliegende Erfindung betrifft einen integrierten Schaltkreis zur Verarbeitung sicherheitsrelevanter Daten mit Datenausgabe- und Zugriffskontrollschaltungen sowie eine Schaltungsanordnung zur Stromversorgung sicherheitsrelevanter Teile eines integrierten Schaltkreises.

Integrierte Schaltkreise, die in Chipkarten eingesetzt werden, welche sicherheitsrelevante Daten enthalten, können das Ziel verschiedenster Angriffe auf die in diesen integrierten Schaltungen enthaltenen sicherheitsrelevanten Daten sein.

Physikalische Attacken auf Chipkarten können verschiedene Ziele haben:

- Auslesen (Probing) von geheimen Signalen
- Erzwingen (Forcing) von Steuersignalen.

In Sicherheitstechnologien werden deshalb geheime Signale und Steuersignale in schwer zugänglichen Maskenebenen geführt und durch Shieldinglayer zusätzlich geschützt (sogenannte Security Layer).

Über die Methoden Probing und Forcing hinaus besteht jedoch auch die Möglichkeit, Schaltungsblöcke von der Versorgung zu trennen, um gezielt "stuck - at" Fehler an Steuersignalen zu erzeugen und damit z.B. Blockadefunktionen aufzuheben.

Zur Abwehr solcher Angriffe, bei denen gezielt Zugriffskontrollschaltungen auf einem IC spannungslos gemacht werden, wurde gemäß dem Stand der Technik bisher die Versorgung solcher Zugriffskontrollschaltungen doppelt geführt (sowohl in der Aluminium- als auch in der Diffusionsebene). Gemäß dem Stand der Technik konnte man also einen solchen oben beschriebenen Angriff dadurch abwehren, indem man die Versorgung zu den Zugriffskontrollschaltungen in untrennbaren Layern (Ebenen des IC) führt (beispielsweise in der Diffusionsebene).

Die doppelte Führung der Versorgung hat den Nachteil, daß erheblicher Platz auf dem IC verlorengeht, da ansonsten in der Diffusion Signale geführt werden könnten. Eine Führung der Stromversorgung ausschließlich in der Diffusion hat den Nachteil, daß der elektrische Widerstand der Diffusionsschicht üblicherweise höher ist. Es treten daher entweder Spannungsabfälle auf, oder es müssen entsprechend breite Bahnen in der Diffusion vorgesehen werden, was wiederum zu erheblichem Platzverlust führt.

Aus der EP 0 509 567 A2 ist eine integrierte Schaltung mit Vorrichtungen zum Schutz geheimer Informationen bekannt. Diese Schaltung besitzt eine Ummantelung aus einem piezoelektrischen Material. Bei der Ausübung eines mechanischen Drucks auf die Ummantelung erzeugt diese eine Spannung, was durch Überwachungsmittel detektiert wird und mit Hilfe von Zerstörungsmitteln zur Löschung der geheimen Informationen führt.

Es ist daher Aufgabe der vorliegenden Erfindung, eine integrierte Schaltung zur Verarbeitung sicherheitsrelevanter Daten und eine Schaltungsanordnung zur Stromversorgung sicherheitsrelevanter Teile eines integrierten Schaltkreises zu schaffen, bei der bei gleichbleibender oder sogar verbesserter Sicherheit nicht so viel Platz für eine zusätzlich oder ausschließlich in der Diffusion geführte Stromversorgung sicherheitsrelevanter Teile des IC's erforderlich ist.

Erfindungsgemäß wird diese Aufgabe dadurch gelöst, daß eine Störung der Stromversorgung der Zugriffskontrollschaltungen zu einer Blockierung der Datenausgabeschaltungen führt.

Eine mögliche bevorzugte Weiterbildung dieser Lösung beruht darauf, daß Blockierungssignale von den Zugriffskontrollschaltungen erzeugt werden, die jeweils paarweise invers sind, und die Datenausgabeschaltungen nur dann arbeiten, wenn jeweils beide inversen Blockierungssignale eine Aufhebung der Blockierung anzeigen. Wird nun eine der Stromversorgungen der Zugriffskontrollschaltung unterbrochen, nimmt zwangsläufig eines der Blockierungssignale einen "falschen" Wert an, wodurch die Datenausgabe blockiert wird.

Es ist dabei besonders bevorzugt, die jeweils zueinander gehörenden inversen Blockierungssignale parallel zueinander in der integrierten Schaltung zu führen. Dies erschwert den Angriff auf ein einzelnes Blockierungssignal.

Weiter ist es bevorzugt, die Blockierungssignale in der Diffusion oder in einem Security Layer zu führen. Ansonsten könnte durch einen Zugriff auf die Blockierungssignale, wenn auch mit einigem Aufwand, eine Entblockierung der Datenausgabeschaltungen erreicht werden.

Eine andere bevorzugte Weiterbildung der Erfindung beruht darin, die Stromversorgung der Datenausgabeschaltungen so zu führen, daß diese Stromversorgung unterbrochen wird, wenn die Stromversorgung der Zugriffskontrollschaltung gestört wird.

Zu diesem Zweck kann man vorzugsweise die Stromversorgung der Datenausgabeschaltungen an die Stromversorgung der Zugriffskontrollschaltungen anschließen. Dies ist eine sehr einfache Möglichkeit, um die integrierte Schaltung gegen die genannten Manipulationen zu schützen.

Noch größere Sicherheit bietet die bevorzugte Lösung, bei der die Stromversorgung der Datenausgabeschaltungen über einen oder mehrere Schalter geführt ist, die öffnen, wenn die Stromversorgung der Zugriffskontrollschaltungen gestört wird. Auf diese Weise kann auch vermieden werden, daß die Stromversorgung der Datenausgabeschaltung durch Aufsetzen einer elektrisch leitenden Nadel auf entsprechende Bezirke des IC wiederhergestellt wird, obwohl die Stromversorgung der Zugriffskontrollschaltungen gestört ist.

Besonders bevorzugt ist dabei die Lösung, daß ein NMOS-Schalter zwischen der allgemeinen Versorgungsspannung $V_{DD}$ und der Stromversorgung der Datenausgabeschaltungen angeordnet ist, dessen Gate über eine in der Diffusion oder in einem Security Layer geführte Leitung mit der $V_{DD}$-Stromversorgung der Zugriffskontrollschaltungen verbunden ist.

Ebenso wird die Aufgabe der vorliegenden Erfindung durch eine Schaltungsanordnung zur Stromversorgung sicherheitsrelevanter Teile eines integrierten Schaltkreises, die durch entsprechende Zugriffskontrollschaltungen geschützt sind, gelöst, indem die Stromversorgung der sicherheitsrelevanten Teile so geführt ist, daß diese Stromversorgung unterbrochen wird, wenn die Stromversorgung der Zugriffskontrollschaltungen gestört wird.

Dabei ist eine besonders einfache Lösung möglich, wenn die Stromversorgung der sicherheitsrelevanten Teile an die Stromversorgung der Zugriffskontrollschaltungen angeschlossen ist.

Größere Sicherheit bietet eine Lösung, bei der die Stromversorgung der sicherheitsrelevanten Teile über einen oder mehrere Schalter geführt ist, die öffnen, wenn die Stromversorgung der Zugriffskontrollschaltungen gestört wird. Auf diese Weise läßt sich die gewaltsame Wiederherstellung einer Stromversorgung der sicherheitsrelevanten Teile verhindern, während die Stromversorgung der Zugriffskontrollschaltungen unterbrochen ist.

Dabei ist es besonders bevorzugt, einen NMOS-Schalter zwischen der allgemeinen Stromversorgung $V_{DD}$ und der Stromversorgung der sicherheitsrelevanten Teile anzuordnen, dessen Gate über eine in der Diffusion oder in einem Security Layer geführte Leitung mit der $V_{DD}$-Stromversorgung der Zugriffskontrollschaltungen verbunden ist.

Durch eine Kombination der oben beschriebenen Sicherheitsmaßnahmen läßt sich eine noch größere Sicherheit des integrierten Schaltkreises bei natürlich etwas höherem Aufwand vorzugsweise erreichen.

Die vorliegende Erfindung wird im folgenden anhand des in der beigefügten Zeichnung beschriebenen Ausführungsbeispiels näher erläutert. Es zeigt:

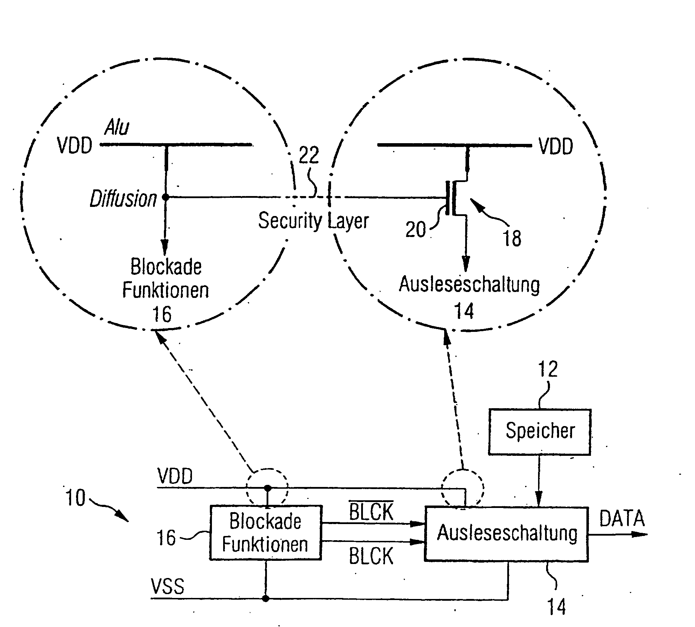

> Fig. 1 einen schematischen Ausschnitt aus einer integrierten Schaltung, bei der sämtliche erfindungsgemäß vorgeschlagenen Sicherheitsmerkmale parallel vorgesehen sind.

Die Fig. 1 zeigt ein schematisches Blockschaltbild eines IC's, in dessen Speicher 12 sicherheitsrelevante Daten abgelegt sind. Der integrierte Schaltkreis 10 verfügt somit über einen Speicher 12, der mit einer Ausleseschaltung 14 verbunden ist. Von der Ausleseschaltung 14 werden die aus dem Speicher 12 ausgelesenen Daten auf den mit "Data" bezeichneten Ausgang geführt.

Weiterhin ist ein Block mit Zugriffskontrollschaltungen 16 vorgesehen, der die entsprechenden Blockadefunktionen enthält. Durch diese Funktionen wird sichergestellt, daß beispielsweise nur der berechtigte Benutzer nach Eingabe eines Kennwortes auf die im Speicher 12 abgelegten Daten zugreifen kann.

Wie in Fig. 1 dargestellt, ist die Stromversorgung der Zugriffskontrollschaltungen 16 und der Ausleseschaltung 14 dergestalt angeordnet, daß beide Äste der Stromversorgung, $V_{DD}$ und $V_{SS}$ zuerst zu den Zugriffskontrollschaltungen 16 und sodann zu der Ausleseschaltung 14 geführt sind. Ein einfaches Auftrennen von $V_{DD}$ oder $V_{SS}$ vor den Zugriffskontrollschaltungen 16 macht automatisch auch die Ausleseschaltung 14 spannungslos, so daß keine Daten aus dem Speicher 12 mehr ausgelesen werden können.

Die Versorgungen $V_{DD}$ und $V_{SS}$ sind dabei wie üblich in der Aluminiumlage geführt.

Dadurch würde grundsätzlich die Möglichkeit eines Angriffs dergestalt bestehen, daß man $V_{DD}$ vor und hinter den Blockadefunktionen unterbricht und die Ausleseschaltung durch eine direkt dort auf das Aluminium aufgebrachte Stromversorgung separat versorgt.

Um dies zu vermeiden, ist zusätzlich an der Stelle, an der die Stormversorgung der Ausleseschaltung 14 von der im Aluminium Layer $V_{DD}$ abzweigt, ein NMOS-Schalter 18 zwischen $V_{DD}$ und die Ausleseschaltung 14 geschaltet, dessen Gate 20 über eine in einem Security Layer oder in der Diffusion geführte Leitung 22 mit der Stromversorgung der Zugriffskontrollschaltungen 16 in der Diffusionsebene verbunden ist. Auf diese Weise ist sichergestellt, daß bei jeglicher Unterbrechung der Stormversorgung zu den Zugriffskontrollschaltungen 16 der NMOS-Schalter 18 öffnet und die Ausleseschaltung 14 stromlos wird, wodurch ein Auslesen des Speichers 12 unmöglich gemacht wird.

Zusätzlich ist, wie in Fig. 1 dargestellt, vorgesehen, das Freigabesignal BLCK von der Zugriffskontrollschaltung 16 an die Ausleseschaltung 14 doppelt und invers zu führen. Dies bedeutet, daß das Signal einmal positiv als BLCK-Signal und einmal negativ als $\overline{BLCK}$-Signal vorliegt. Die Ausleseschaltung kann nur Daten auslesen, wenn beide Signale richtig sind. Wird nun die Stromversorgung zu den Zugriffskontrollschaltungen 16 unterbrochen, so wird zumindest eines dieser Signale "falsch" und die Ausleseschaltung blockiert. Dabei ist es sogar unabhängig, ob $V_{DD}$ oder $V_{SS}$ unterbrochen wird. Die Ausleseschaltung 14 wird auf jeden Fall blockiert. Die Sicherheit kann dabei noch weiter erhöht werden, indem die jeweils zueinander gehörenden inversen Blockierungssignale parallel zueinander in der integrierten Schaltung und vorzugsweise in der Diffusion oder in einem Security Layer geführt sind.

Erfindungsgemäß besteht also die Möglichkeit, die Schaltungsblöcke bzgl. der Versorgungsverdrahtung so anzuordnen, daß der das Steuersignal erzeugende Block vor den Schaltungsblöcken liegt, die die geheimen Signale generieren. Mit dem Blokkadesignal wird dann beim Abtrennen der Versorgung auch das geheime Signal vernichtet.

Als zweite Maßnahme kann man zusätzlich das inverse Blockadesignal parallel generieren und beim Erzeugen des geheimen Signals mit auswerten. Damit wird sichergestellt, daß an dem das Steuersignal generierenden Block beide Versorgungen vorhanden sind. Die Versorgung innerhalb dieses Blockes muß dabei in untrennbaren Layern geführt sein. Die inversen Steuersignale führt man vorteilhafterweise übereinander zum auswertenden Block, um ein Forcing zu erschweren.

Wird die Versorgung vor dem das Steuersignal erzeugenden Block abgetrennt, sperrt man damit gleichzeitig das geheime Signal. Dabei ist es nicht notwendig, die Versorgungsverdrahtung zwischen den Blöcken doppelt zu führen, und man gewinnt Verdrahtungsfläche für die Signalverdrahtung.

Alternativ zu den beschriebenen Maßnahmen kann man die Versorgung des Blockes, der das geheime Signal generiert, über einen Schalter führen, der abhängig von der Versorgung des Steuerblocks ein- oder ausschaltet. Dabei ist es notwendig, ein Sicherheitssignal von der innerhalb des Steuerblocks untrennbaren Versorgung zum Gate des Schalters zu führen.

Um die physikalischen Manipulationsmöglichkeiten zu erschweren, wird erfindungsgemäß bezüglich der Versorgungsverdrahtung eine Blockanordnung vorgeschlagen, die ein Design gegenüber zerstörenden Angriffen robust macht, ohne daß ein Mehraufwand an Versorgungsverdrahtung (redundante Versorgung in

Diffusion) entsteht. Dieses Blockplacement wird üblicherweise anders aussehen als das einer ad hoc Flurplanung, das die beschriebenen Randbedingungen nicht ins Auge faßt.

Die Steuersignale werden mit ihren inversen Pendants parallel von Block zu Block geführt, um am auswertenden Block sicherzustellen, daß am generierenden Block beide Versörgungspolaritäten anliegen.

Als Abwandlung wird vorgeschlagen, die Versorgung des zu sperrenden Blocks über einen Schalter von der Versorgung der Steuerfunktion abhängig zu machen, wobei die Anordnung so designed ist, daß sich eine physikalische Manipulation zum Erzeugen eines "stuck art" Fehlers an einem Steuersignal nicht schädlich auswirkt. Das ist mit zusätzlichem Schaltungsaufwand verbunden (Zufügen eines Schalters), der nicht gerechtfertigt wäre, wenn man diese Manipulationsmöglichkeit nicht absichern wollte.

Fig. 1 zeigt als Ausführungsbeispiel eine Anordnung in einem Speicherbaustein, bei dem die aus dem Speicher 12 ausgelesenen Daten über eine Blokkadefunktion für einen Lesezugriff gesperrt werden. Blockade- und Ausleseschaltung sind so angeordnet, daß ein Abtrennen der Blockadefunktion von der Versorgung gleichzeitig die Ausleseschaltung unversorgt schaltet und damit blockiert.

Das Blockadesignal BLCK ist parallel zu seinem inversen Pendant zur Ausleseschaltung geführt, wo beide Steuersignale ausgewertet werden.

Als Variante ist in vergrößerter Darstellung eine Anordnung gezeichnet, bei der die in Diffusion geführte Versorgung der Blockadefunktion auf das Gate eines NMOS-Schalters geführt wird, der die Ausleseschaltung versorgt. Wird die Blockade-Schaltung von $V_{DD}$ getrennt, wird gleichzeitig die Ausleseadresse von der Versorgung abgekoppelt.

**Patentansprüche**

1. Schaltungsanordnung zur Stromversorgung sicherheitsrelevanter Teile (14) eines integrierten Schaltkreises, die durch entsprechende Zugriffskontrollschaltungen (16) geschützt sind, **dadurch gekennzeichnet, daß** die Stromversorgung ($V_{DD}$,$V_{SS}$) der sicherheitsrelevanten Teile (14) so geführt ist, daß diese Stromversorgung ($V_{DD}$,$V_{SS}$) unterbrochen wird, wenn die Stromversorgung der Zugriffskontrollschaltungen (16) gestört wird.

2. Schaltungsanordnung nach Anspruch 1, **dadurch gekennzeichnet, daß** die Stromversorgung der sicherheitsrelvanten Teile (14) an die Stromversorgung der Zugriffskontrollschaltungen (16) angeschlossen ist.

3. Schaltungsanordnung nach Anspruch 1, **dadurch gekennzeichnet, daß** die Stromversorgung der sicherheitsrelevanten Teile (14) über einen oder mehrere Schalter (18) geführt ist, die öffnen, wenn die Stromversorgung der Zugriffskontrollschaltungen (16) gestört wird.

4. Schaltungsanordnung nach Anspruch 3, **dadurch gekennzeichnet, daß** ein NMOS-Schalter (18) zwischen der Stromversorgung $V_{DD}$ und der Stromversorgung der sicherheitsrelevanten Teile (14) angeordnet ist, dessen Gate (20) über eine in der Diffusion oder in einem Security Layer geführte Leitung (22) mit der $V_{DD}$-Stromversorgung der Zugriffskontrollschaltungen (16) verbunden ist.

5. Integrierter Schaltkreis zur Verarbeitung sicherheitsrelevanter Daten mit Datenausgabe- (14) und Zugriffskontrollschaltungen (16), **dadurch gekennzeichnet, daß** eine Störung der Stromversorgung der Zugriffskontrollschaltungen (16) zu einer Blockierung der Datenausgabeschaltungen (14) führt.

6. Integrierter Schaltkreis nach Anspruch 5, **dadurch gekennzeichnet, daß** Blockierungssignale (**BLCK**, $\overline{\textbf{BLCK}}$) von den Zugriffskontrollschaltungen (16) erzeugt werden, die jeweils paarweise invers sind, und die Datenausgabeschaltungen (14) nur dann arbeiten, wenn jeweils beide inversen

Blockierungssignale (**BLCK**, $\overline{BLCK}$) eine Aufhebung der Blockierung anzeigen.

**7.** Integrierter Schaltkreis nach Anspruch 6, **dadurch gekennzeichnet, daß** die jeweils zueinander gehörenden inversen Blockierungssignale (**BLCK**, $\overline{BLCK}$) parallel zueinander und vorzugsweise übereinander in der integrierten Schaltung geführt sind.

**8.** Integrierter Schaltkreis nach Anspruch 6 oder 7, **dadurch gekennzeichnet, daß** die Blockierungssignale (**BLCK**, $\overline{BLCK}$) in der Diffusion oder in einem Security Layer geführt sind.

**9.** Integrierter Schaltkreis nach Anspruch 5, **dadurch gekennzeichnet, daß** die Stromversorgung der Datenausgabeschaltungen (14) so geführt ist, daß diese Stromversorgung unterbrochen wird, wenn die Stromversorgung der Zugriffskontrollschaltungen (16) gestört wird.

**10.** Integrierter Schaltkreis nach Anspruch 6, **dadurch gekennzeichnet, daß** die Stromversorgung der Datenausgabeschaltungen (14) an die Stromversorgung der Zugriffskontrollschaltungen (16) angeschlossen ist.

**11.** Integrierter Schaltkreis nach Anspruch 9, **dadurch gekennzeichnet, daß** die Stromversorgung der Datenausgabeschaltungen (14) über einen oder mehrere Schalter (18) geführt ist, die öffnen, wenn die Stromversorgung der Zugriffskontrollschaltungen (16) gestört wird.

**12.** Integrierter Schaltkreis nach Anspruch 11, **dadurch gekennzeichnet, daß** ein NMOS-Schalter (18) zwischen der Stromversorgung $V_{DD}$ und der Stromversorgung der Datenausgabeschaltungen (14) angeordnet ist, dessen Gate (20) über eine in der Diffusion oder in einem Security Layer geführte Leitung (22) mit der $V_{DD}$-Stromversorgung der Zugriffskontrollschaltungen (16) verbunden ist.

**Claims**

**1.** Circuit arrangement for the power supply of security-relevant parts (14) of an integrated circuit, which are protected by corresponding access control circuits (16), **characterized in that** the power supply ($V_{DD}$, $V_{SS}$) of the security-relevant parts (14) is conducted in such a way that said power supply ($V_{DD}$, $V_{SS}$) is interrupted if the power supply of the access control circuits (16) is disturbed.

**2.** Circuit arrangement according to Claim 1, **characterized in that** the power supply of the security-relevant parts (14) is connected to the power supply of the access control circuits (16).

**3.** Circuit arrangement according to Claim 1, **characterized in that** the power supply of the security-relevant parts (14) is conducted via one or more switches (18) which open if the power supply of the access control circuits (16) is disturbed.

**4.** Circuit arrangement according to Claim 3, **characterized in that** an NMOS switch (18) is arranged between the power supply $V_{DD}$ and the power supply of the security-relevant parts (14), the gate (20) of which is connected to the $V_{DD}$ power supply of the access control circuits (16) via a line (22) routed in the diffusion or in a security layer.

**5.** Integrated circuit for processing security-relevant data with data output (14) and access control circuits (16), **characterized in that** a disturbance of the power supply of the access control circuits (16) leads to a blocking of the data output circuits (14).

**6.** Integrated circuit according to Claim 5, **characterized in that** blocking signals (**BLCK**, $\overline{BLCK}$) are generated by the access control circuits (16), which are respectively inverse in pairs, and the data output circuits (14) operate only when in each case both inverse blocking signals (**BLCK**, $\overline{BLCK}$) indicate cancellation of the blocking.

**7.** Integrated circuit according to Claim 6, **characterized in that** the respectively mutually associated inverse blocking signals (**BLCK**, $\overline{BLCK}$) are conducted parallel to one another and preferably one above the other in the integrated circuit.

**8.** Integrated circuit according to Claim 6 or 7, **characterized in that** the blocking signals (**BLCK**, $\overline{BLCK}$) are conducted in the diffusion or in a security layer.

**9.** Integrated circuit according to Claim 5, **characterized in that** the power supply of the data output circuits (14) is conducted in such a way that said power supply is interrupted if the power supply of the access control circuits (16) is disturbed.

**10.** Integrated circuit according to Claim 6, **characterized in that** the power supply of the data output circuits (14) is connected to the power supply of the access control circuits (16).

**11.** Integrated circuit according to Claim 9, **characterized in that** the power supply of the data output circuits (14) is conducted via one or more switches (18) which open if the power supply of the access control circuits (16) is disturbed.

**12.** Integrated circuit according to Claim 11, **characterized in that** an NMOS switch (18) is arranged between the power supply $V_{DD}$ and the power supply of the data output circuits (14), the gate (20) of which is connected to the $V_{DD}$ power supply of the access control circuits (16) via a line (22) routed in the diffusion or in a security layer.

**Revendications**

**1.** Montage d'alimentation en courant de parties (14) importantes du point de vue de la sécurité d'un circuit intégré, qui sont protégées par des circuits (16) correspondants de contrôle d'accès, **caractérisé en ce que** l'alimentation ($V_{DD}$, $V_{SS}$) en courant des parties (14) qui sont importantes du point de vue de la sécurité est effectuée de façon à ce que cette alimentation ($V_{DD}$, $V_{SS}$) en courant soit interrompue si l'alimentation en courant des circuits (16) de contrôle d'accès est perturbée.

**2.** Montage suivant la revendication 1, **caractérisé en ce que** l'alimentation en courant des parties (14) importantes du point de vue de la sécurité est raccordée à l'alimentation en courant des circuits (16) de contrôle d'accès.

**3.** Montage suivant la revendication 1, **caractérisé en ce que** l'alimentation en courant des parties (14) ayant de l'importance du point de vue de la sécurité s'effectue par un ou par plusieurs commutateurs (18) qui s'ouvrent si l'alimentation en courant des circuits (16) de contrôle d'accès est perturbée.

**4.** Montage suivant la revendication 3, **caractérisé en ce qu'**un commutateur (18) NMOS est monté entre l'alimentation VDD en courant et l'alimentation en courant des parties (14) importantes du point de vue de la sécurité, commutateur dont la grille (20) est reliée par une ligne (22) passant dans la diffusion ou dans une Security Layer à l'alimentation en courant $V_{DD}$ des circuits (16) de contrôle d'accès.

**5.** Circuit intégré de traitement de données importantes du point de vue de la sécurité comprenant des circuits (14) d'émission de données et des circuits (16) de contrôle d'accès, **caractérisé en ce qu'**une perturbation de l'alimentation en courant des circuits (16) de contrôle d'accès entraîne un blocage des circuits d'émission de données.

**6.** Circuit intégré suivant la revendication 5, **caractérisé en ce qu'**il est produit par les circuits (16) de contrôle d'accès des signaux (BLCK, $\overline{BCLK}$) de blocage qui sont respectivement inverses par paires et les circuits (14) d'émission de données ne fonctionnent que si respectivement deux signaux

(BLCK, $\overline{BLCK}$) inverses de blocage indiquent une cessation du blocage.

**7.** Circuit intégré suivant la revendication 6, **caractérisé en ce que** les signaux (BLCK, $\overline{BLCK}$) inverses de blocage se correspondant respectivement l'un à l'autre, sont envoyés en parallèle l'un à l'autre et, de préférence, en étant superposés dans le circuit intégré.

**8.** Circuit intégré suivant la revendication 6 ou 7, **caractérisé en ce que** les signaux (BLCK, $\overline{BLCK}$) de blocage passent dans la diffusion ou dans une Security Layer.

**9.** Circuit intégré suivant la revendication 5, **caractérisé en ce que** l'alimentation en courant des circuits (14) d'émission de données est effectuée de façon à ce que cette alimentation en courant soit interrompue, si l'alimentation en courant des circuits (16) de contrôle d'accès est perturbée.

**10.** Circuit intégré suivant la revendication 6, **caractérisé en ce que** l'alimentation en courant des circuits (14) d'émission de données est raccordée à l'alimentation en courant des circuits (16) de contrôle d'accès.

**11.** Circuit intégré suivant la revendication 9, **caractérisé en ce que** l'alimentation en courant des circuits (14) d'émission de données s'effectue par un ou par plusieurs commutateurs (18) qui s'ouvrent si l'alimentation en courant des circuits (16) de contrôle d'accès est perturbée.

**12.** Circuit intégré suivant la revendication 11, **caractérisé en ce qu'**un commutateur (18) NMOS est monté entre l'alimentation $V_{DD}$ en courant et l'alimentation en courant des circuits (14) d'émission de données, la grille (20) de ce commutateur étant reliée par une ligne (22) qui passe dans la diffusion ou dans une Security Layer à l'alimentation en courant $V_{DD}$ des circuits (16) de contrôle d'accès.

VDD    *Alu*

*Diffusion*    Security Layer    22

Blockade
Funktionen
16

20    18

Ausleseschaltung
14

VDD

Speicher    12

10

16    Blockade
Funktionen

$\overline{BLCK}$

BLCK

Ausleseschaltung    DATA

14

VSS